Europäisches Patentamt

**European Patent Office**

Office européen des brevets

(11) Veröffentlichungsnummer : **0 075 973**
**B1**

(12) **EUROPÄISCHE PATENTSCHRIFT**

(45) Veröffentlichungstag der Patentschrift :
**21.01.87**

(21) Anmeldenummer : **82201031.0**

(22) Anmeldetag : **16.08.82**

(51) Int. Cl.⁴ : **F 02 C  6/16**, B 65 G  5/00,
E 21 F  17/16

(54) Gleichdruckluftspeicherkaverne mit hydraulischem Druckausgleich für Luftspeichergasturbinenkraftwerke.

(30) Priorität : 18.09.81 CH 6040/81

(43) Veröffentlichungstag der Anmeldung :
06.04.83 Patentblatt 83/14

(45) Bekanntmachung des Hinweises auf die Patenterteilung : 21.01.87 Patentblatt 87/04

(84) Benannte Vertragsstaaten :
**CH DE GB LI SE**

(56) Entgegenhaltungen :
**EP-A- 0 030 744**
**FR-A- 1 209 936**
**FR-A- 2 112 724**
**FR-A- 2 461 194**
**REVUE GENERALE DE THERMIQUE, Band 14, Nr. 157, Januar 1975, Seiten 17-25, Paris, FR. J. FLEURY: "Transfert d'énergie par stockage d'air comprimé"**
**Die Akte enthält technische Angaben, die nach dem Eingang der Anmeldung eingereicht wurden und die nicht in dieser Patentschrift enthalten sind.**

(73) Patentinhaber : **BBC Aktiengesellschaft Brown, Boveri & Cie.**
**Haselstrasse**
**CH-5401 Baden (CH)**

(72) Erfinder : **Hürlimann, Reinhard, Dr.**
**Luegete 28**
**CH-8053 Zürich (CH)**
Erfinder : **Zaugg, Paul**
**Hirzemätteli 5**
**CH-5400 Baden (CH)**

## Beschreibung

Die vorliegende Erfindung betrifft eine Gleichdruckluftspeicherkaverne mit hydraulischem Druckausgleich für Luftspeichergasturbinenkraftwerke nach dem Oberbegriff des Patentanspruchs 1.

Gleichdruckluftspeicheranlagen für Gasturbinenkraftwerke benötigen gegenüber gleich leistungsfähigen Luftspeicheranlagen mit variablem Luftdruck, der im Betrieb zwischen gewissen Grenzen schwanken darf, nur etwa ein Drittel des Volumens der letzteren. Dementsprechend sind der bauliche Aufwand und die Erstellungskosten einer Kaverne für Gleichdruckspeicherung weit geringer als bei Kavernen für variablen Luftdruck.

Zur Konstanthaltung des Luftdruckes bei Gleichdruckspeicherung dient eine das in der Kaverne verbrauchte Luftvolumen ausgleichende Wasservorlage mit einer Wassersäule, die in ein freies, gewöhnlich an der Erdoberfläche liegendes Bassin mündet und deren statische Druckhöhe dem in der Kaverne aufrechtzuerhaltenden Druck entspricht. Beim Laden der Kaverne, die bei heutigen Anlagen in 600-800 m Tiefe liegt, entsprechend einem statischen Druck der Wassersäule von 60-80 bar, wird das Wasser in das Bassin hinaufgedrückt, beim Entladen läuft das Wasser aus dem Bassin in die Kaverne nach, um den gleichen Druck sicherzustellen.

Um ein abwechselndes Laden und Entladen der Speicherkaverne zu ermöglichen, befinden sich zwischen dem aus der Kaverne aufsteigenden Luftkanal und dem Verdichter einerseits und vor der Brennkammer der Turbine andererseits Absperrorgane, die beim Uebergang vom Lade- zum Entladebetrieb und umgekehrt entsprechend betätigt werden müssen. Wenn diese Umschaltung nicht korrekt ausgeführt wird, z. B. unabsichtlich ganz oder teilweise offen bleibt, oder wenn eine Rohrleckage oder eine Havarie der Verdichterbeschaufelung auftritt, so kann die Druckluft aus der Kaverne entweichen, wodurch das Wasser in der Kaverne steigt. Falls die Fehlbedienung der erwähnten Absperrorgane nicht sofort berichtigt oder die Rohrleckage nicht schnellstens behoben werden kann, so droht infolge der im Luftkanal wegen der hydrostatischen Druckabnahme ausgasenden Luft mit entsprechender Volumenzunahme des Wasser/Luft-Gemisches ein Hochjagen des Wassers in die Turbinenanlage mit eventuell verheerenden Folgen für die ganze Anlage.

Die bisher bekanntgewordenen Vorschläge zur Lösung dieses Problems beruhen auf verschiedenen Prinzipien. Einige beruhen darauf, den Wasserspiegel gegen die Berührung mit Luft möglichst vollständig abzuschirmen und damit die Absorption von Luft im Wasser zu verhindern. Dazu gehören schwimmfähige mechanische Abdeckmittel, wie an vertikalen Stangen geführte Schwimmkörper, Planen mit Auftriebskörpern, schwimmenden Bällen u. ä. sowie auf dem Wasser schwimmende Deckschichten einer spezifisch leichteren Flüssigkeit als Wasser. Andere Vorschläge zielen darauf ab, die sich in der Wasservorlage bildenden Blasen vor dem Aufsteigen in das oberirdische Bassin, das Ausgleichsbecken, zu hindern. Zu den Mitteln, die dies bezwecken, gehören beispielsweise oberhalb des Wasserspiegels des Ausgleichsbeckens in die Umgebung mündende Steigrohre, Turbinenräder, die das Ausscheiden von Luftbläschen vor Eintritt der kritischen Blasenbildung induzieren sollen, und sonstige, zum Teil sehr aufwendige apparative Massnahmen.

Alle diese Vorschläge vermögen praktisch nicht ganz zu befriedigen, da sie baulich aufwendig und auch nicht vollständig wartungsfrei sind. Auch ist ihre Wirksamkeit praktisch nicht erprobt und daher noch unsicher.

Ein weiteres Prinzip zur Verhinderung des Ausblasens des Kavernenwassers macht sich eine in der EP-A-30 744 beschriebene Einrichtung zunutze. Dabei sorgen Leiteinrichtungen in der Kaverne oder in deren Sohle für eine Laminarisierung des ein- und ausströmenden Kavernenwassers. Die Mittel dazu bestehen z. B. aus einem Gitterrost innerhalb der Kaverne mit vertikalen, parallelen Wänden, oder aus horizontalen, parallelen Schienen oder schlitzförmigen Oeffnungen in der Sohle der Kaverne und dergl. Diese Mittel vermindern die Wirbelbildung im zu- und abströmenden Kavernenwasser und dadurch die Absorption von Kavernenluft durch das Kavernenwasser und somit auch die Blasenbildung in der Wasservorlage.

Diese Einrichtung ist zwar im Gegensatz zu den obengenannten Bauarten im Betrieb wartungsfrei, sie hat aber den Nachteil, dass damit aufwendige Installationen in der Kaverne bzw. in deren Sohle verbunden sind und dass zwischen der Wasservorlage und der Kaverne unterhalb von deren Sohle ein aufwendig herzustellendes Kanalsystem im mühevollem bergmännischen Vortrieb ausgeschachtet werden muss.

Die vorliegende, im kennzeichnenden Teil des Anspruchs 1 definierte Erfindung entstand aus der Aufgabe, eine vollständig wartungsfreie Luftspeicherkaverne zu schaffen, bei der die Absorption von Luft im Wasser allein durch geometrische Parameter der Gestalt des Kavernenraumes in Verbindung mit betrieblichen Massnahmen derart klein gehalten wird, dass durch in der Wasservorlage eventuell noch entstehende Luftblasen keine Betriebsstörungen verursacht werden können.

Die Erfindung wird nachfolgend anhand von in den Zeichnungen dargestellten Ausführungsbeispielen und Diagrammen näher beschrieben.

Es stellen dar :

Figur 1 einen Vertikalschnitt durch ein Kavernenbauwerk der erfindungsgemässen Art,

Figur 2 ein Diagramm, das im Vergleich einer konventionellen und einer erfindungsgemässen Kavernengestalt die Abhängigkeit des luftbenetzten Wasserspiegels vom Füllungsgrad der Kaverne darstellt,

Figur 3 den Absorptionsgrad von Luft in Wasser bei verschiedenen Wassergeschwindigkeiten, und die

Figuren 4 bis 6 die freie Wasserspiegelfläche bei verschiedenen Betriebszuständen der Luftspeichergasturbinenanlage.

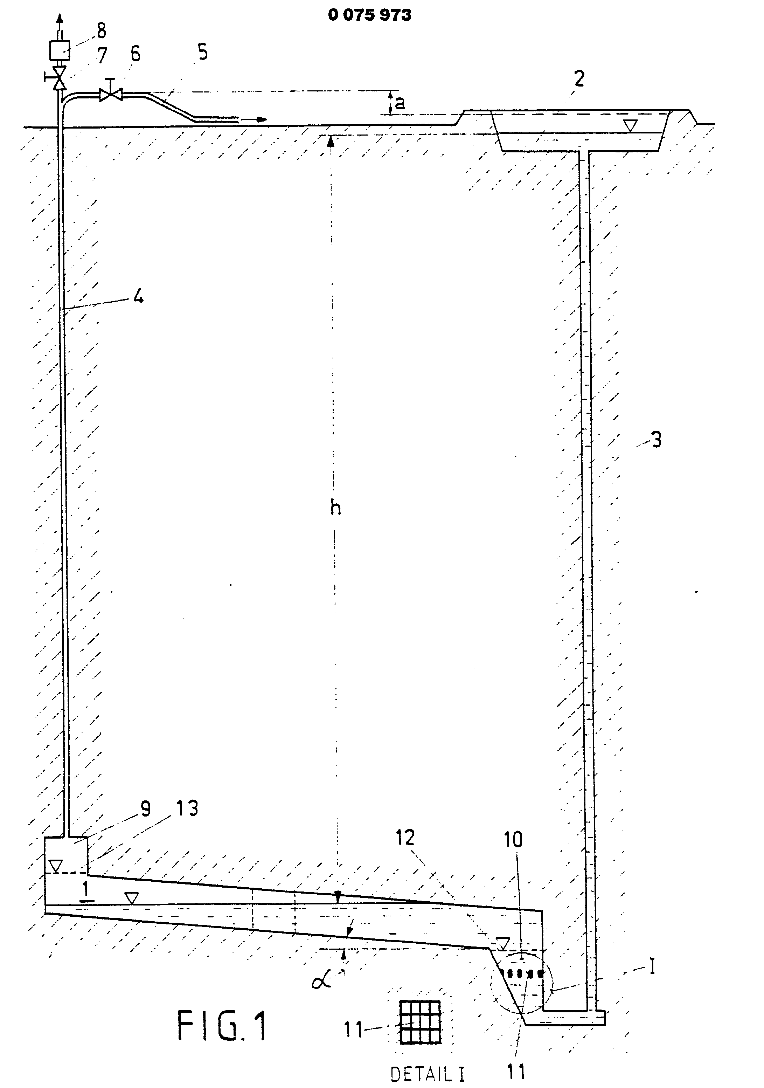

Bei der Kavernenanlage nach Fig. 1 ist die Druckhöhe, die durch die Höhe des Oberwasserspiegels in einem Ausgleichsbecken 2 über dem Kavernenwasserspiegel in einer Speicherkaverne 1 gegeben ist, mit h bezeichnet. Der Wasserschacht 3, in dem sich die Wasservorlage befindet, mündet mit seinem oberen Ende am Grund des Ausgleichsbeckens 2. Eine Luftsteigleitung 4 geht oberirdisch in eine waagrechte Luftzuleitung 5 mit einem Absperrorgan 6 über, durch die die Luft in Pfeilrichtung den Brennkammern der Gasturbinenanlage im nicht dargestellten Maschinenhaus zugeführt werden kann. In einer vertikalen Verlängerung der Luftsteigleitung nach oben sind ein Ausblaseventil 7 und ein Schalldämpfer 8 vorgesehen, durch die der Speicher bei Bedarf ganz entleert werden kann.

Beim Aufladen der Speicherkaverne 1 verdrängt die durch die Leitung 4 eingepresste Luft das Wasser aus der Kaverne 1 in den Wasserschacht 3, bevor es in das Ausgleichsbecken 2 eintritt. Ueber die Höhe des Wasserschachtes sinkt der Druck vom Speicherdruck, entsprechend der Druckhöhe h, z. B. 55 bar, auf den Atmosphärendruck der Umgebung ab.

·Mit den Mitteln der eingangs erwähnten Vorschläge soll vermieden werden, dass sich dabei ein grösserer Teil der Luft noch innerhalb des Wasserschachtes ausscheidet und unter starker Blasenbildung nach oben steigt, da dies zu Betriebsstörungen wegen Wassersäulenschwankungen oder gar vollständigen Ausblasens der Speicherluft führen könnte.

Der Luftgehalt des Wassers hängt hauptsächlich von Druck und Temperatur in der Kaverne, von der Verweildauer des Wassers in der Kaverne und der Grösse der luftbenetzten Wasseroberfläche $A_{LW}$ ab. Letzteres wird erfindungsgemäss sehr wirkungsvoll mit im Verhältnis zu den erwähnten bekannten Ausführungen minimalem Aufwand erreicht, und zwar, indem die Sohle und die Decke der Kaverne 1 unter einem Winkel $\alpha$ zur Horizontalen geneigt ausgeführt werden. Dies bedeutet praktisch nur einen unerheblichen Mehraufwand gegenüber normalen Kavernen mit horizontaler Sohle und horizontaler Decke bei Vermeidung aller Komplikationen, die mit den eingangs erwähnten bekannten Einrichtungen verbunden sind, mit denen das Ausblasen der Wasservorlage verhindert werden soll.

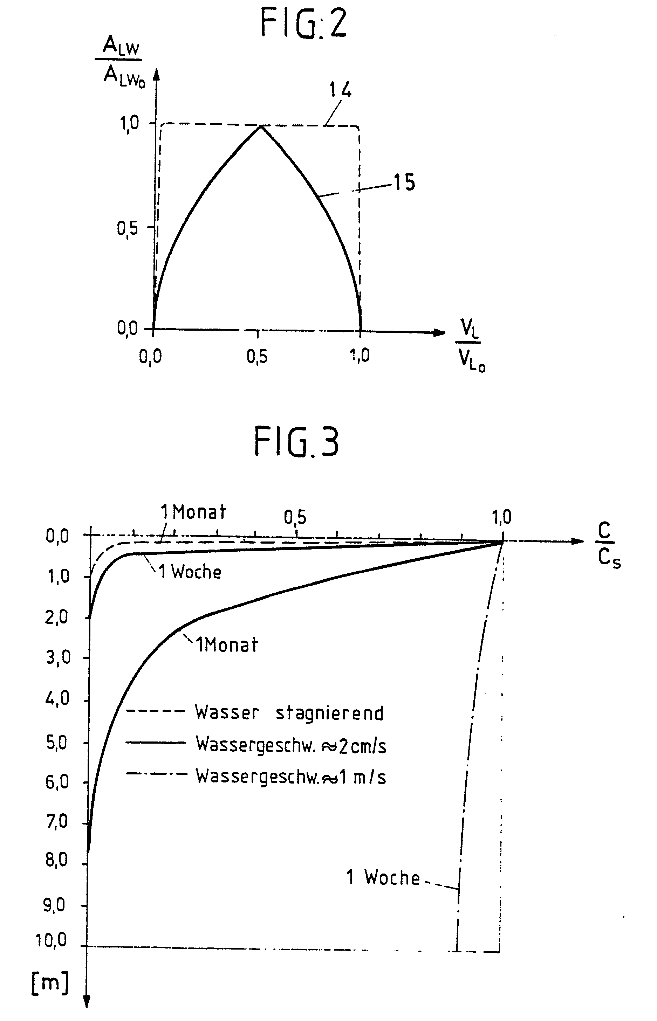

Die gegen die Horizontale geneigte Ausführung von Sohle und Decke der Kaverne bewirkt, wie aus Fig. 1 hervorgeht und in Fig. 2 graphisch in Abhängigkeit vom Füllungsgrad dargestellt, dass die luftbenetzte Wasseroberfläche $A_{LW}$ im Vergleich zur rein horizontalen Kaverne teilweise stark verkleinert wird und die Luftaufnahme sich demgemäss verringert. Die Grösse der Neigung $\alpha$ ist begrenzt durch die gegenüber einer horizontalen Kaverne doch etwas höheren Baukosten und eine stärkere Variation der Druckhöhe h und somit des Speicherdrucks.

Im Bereich des Eingangs in die Luftsteigleitung 4 erweitert sich die Kaverne nach oben zu einem Dom 9, während sie sich am Uebergang zum Wasserschacht 3 nach unten in einem Sumpf 10 fortsetzt. In diesem Sumpf befindet sich ein Wirbelerzeuger 11 in Form eines Gitters aus sich kreuzenden Balken. Die Nebenfigur « Detail I » zeigt diesen Wirbelerzeuger im Grundriss.

Bei normalen Arbeitsspielen variiert der Wasserspiegel in der Kaverne im Maximum zwischen dem Niedrigstniveau 12, wobei sie ganz aufgeladen ist, und dem Höchstniveau 13 bei vollständiger Entladung. In der Fig. 2, in der die Ordinate $A_{LW}/A_{LWo}$ das Verhältnis der benetzten Wasserspiegelfläche $A_{LW}$ einer Kaverne zur Grundrissfläche $A_{LWo}$ der Kaverne und die Abszisse den Füllungsgrad der Kaverne, d. h., das Verhältnis des jeweils lufterfüllten Volumens $V_L$ zum maximalen Speichervolumen $V_{Lo}$ der Kaverne darstellt, gilt der strichlierte Verlauf 14 für eine horizontale Kaverne und die Spitzbogenkurve 15 für eine Kaverne mit geneigter Sohle und geneigter Decke gemäss der Erfindung. Man erkennt, dass im letzteren Falle nur gerade bei halb gefüllter Kaverne, d. h., bei $V_L/V_{Lo}$, die luftbenetzte Wasseroberfläche gleich der Grundrissfläche der Kaverne und damit gleich der luftbenetzten Wasseroberfläche einer horizontalen Kaverne ist, wogegen bei kleinerer und grösserer Füllung die luftbenetzte Wasseroberfläche jeweils kleiner ist und bei voll geladener und voll entleerter Kaverne auf die kleinen Querschnittsflächen des Sumpfes 10 bzw. des Domes 9, also praktisch auf Null, schrumpft. Dabei ist zu beachten, dass die Breitenerstreckung der Kaverne viel grösser ist als die Breite der Querschnitte von Dom und Sumpf, die zweckmässig quadratisch oder kreisförmig ausgeführt werden.

Diesen Verhältnissen entsprechend ist die Luftabsorption des Wassers bei einer solchen geneigten Kaverne geringer als bei horizontalen Kavernen. Es wird sich nur der jeweils luftbenetzte Anteil der obersten Wasserschicht mit Luft stärker anreichern, während die darunterliegenden und die von der Kavernendecke begrenzten Schichten des Wassers fast keine Luft enthalten. Die Querschnittsabmessungen der Kaverne werden so gewählt, dass die Wassergeschwindigkeit an der Berührungsfläche von Luft und Wasser nur wenige cm/sec beträgt. Aus Fig. 3 geht hervor, wie sich der Sättigungszustand C/Cs des Wassers, abhängig von der Tiefe unter dem freien Wasserspiegel, mit der Zeit und der Wassergeschwindigkeit als Parameter ändert. Für die Abszisse bedeutet C/Cs das Verhältnis der jeweiligen örtlichen Sättigung C zur 100 %-igen Sättigung Cs. An der Oberfläche ist 100 %-ige Sättigung angenommen, was aus C/Cs = 1,0 für die Eindringtiefe 0,00 m hervorgeht. Die Zeitdauer bis zum Erreichen des Sättigungszustandes ist stark abhängig vom Bewegungszustand und der Schichtdicke des Wassers. Die Kurven in Fig. 3 gelten für drei verschiedene Bewegungszustände und für Zeiten von 1 Woche bzw. 1 Monat.

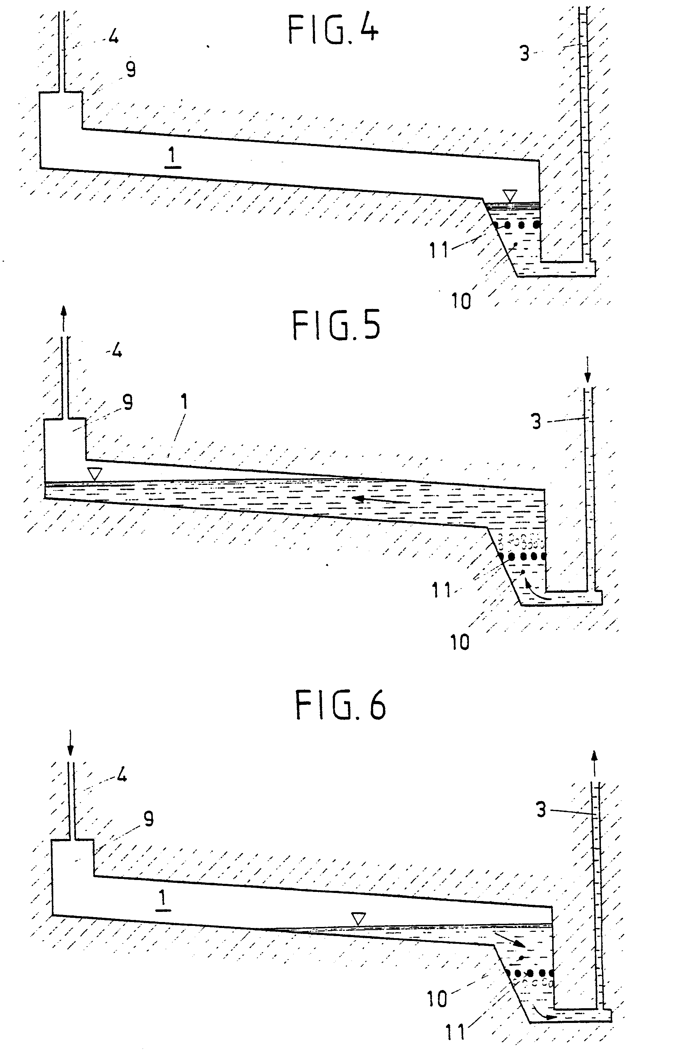

Bei der erfindungsgemässen Kaverne bleibt also einerseits die Luftaufnahme relativ niedrig und andererseits bleibt die lufthaltige Wasserschicht immer zuoberst und sammelt sich am Ende einer Speicheraufladung in den obersten Schichten des Sumpfes 10, wie aus Fig. 4 hervorgeht. Durch den Wirbelerzeuger 11 werden beim Entladen der Kaverne durch das aus dem Wasserschacht 3 nachströmende, entlüftete Frischwasser Wirbel erzeugt, so dass das lufthaltige Wasser oberhalb des Wirbelerzeugers mit dem Frischwasser vermischt und, wie in Fig. 5 dargestellt, der Sättigungsgrad des bei der Entleerung in der Kaverne wieder aufsteigenden Wassers in der freien Oberflächenschicht wieder stark reduziert wird. Beim nachfolgenden Wiederaufladen des Speichers gelangt dann nur ganz schwach gesättigtes Wasser in den Wasserschacht 3, wodurch sich in diesem praktisch keine oder höchstens nur schwache Blasen bilden.

Die Fig. 6 zeigt einen Füllungsgrad beim Aufladevorgang, bei dem die Sättigung der obersten Wasserschicht schon ziemlich stark ist. Bei der Verdrängung scheiden sich unterhalb des Wirbelerzeugers Wirbel und schwache Blasen aus und sobald der Wasserspiegel ganz im Sumpf liegt, ist die oberste Schicht des Restwassers so wie nach Fig. 4 stark gesättigt. Beim Entladen bilden sich, wie in Fig. 5 dargestellt, oberhalb des Wirbelerzeugers 11 Wirbel aus.

Das Höchstniveau 13 des Wasserspiegels im Dom 9, siehe Fig. 1, wird z. B. erreicht, wenn die Anlage wegen einer Revision für längere Zeit stillgelegt werden muss. Dann wird die Kaverne vorher bis zum Erreichen des Höchstniveaus 13 entleert, so dass die luftbenetzte Wasseroberfläche sehr klein wird. Da die Wasserschichtdicke dabei gross ist und das Wasser ruht, bleibt, wie Fig. 3 zeigt, die vom Wasser aufgenommene Luftmenge auch noch nach einem Monat vernachlässigbar klein. Das Restluftvolumen im Dom muss bis zum Wiederinbetriebsetzen der Anlage erhalten bleiben, um die Verdichter mit Hilfe der Turbine zum Wiederaufladen der Kaverne anfahren zu können. Es ist also eine Eigenheit dieser Kavernenbauart, dass die zur Erhaltung der Betriebsbereitschaft der Anlage erforderlichen Restluft- und Restwasservolumina im Dom 9 bzw. im Sumpf 10 nicht über die ganze Kavernenbreite gleichmässig verteilt, sondern an den Kavernenenden konzentriert sind.

Um zu verhindern, dass Wasser aus der Kaverne in die Turbine gelangen kann, liegt der höchste Punkt der Luftsteigleitung 4 nach dem Austritt aus dem Boden um a (siehe Fig. 1) höher als der höchstmögliche Oberwasserspiegel im Ausgleichsbecken 2. Zur vollständigen Entleerung der Kaverne dienen, wie schon erwähnt, das Ausblaseventil 7 und der Schalldämpfer 8.

Um den Luftsättigungsgrad des Kavernenwassers unterhalb der als zulässig angesehenen Grenze zu halten, kann der Sättigungsgrad beim Ueberströmen vom Sumpf 10 in den Wasserschacht 3 gemessen und durch eine Betriebsüberwachungseinrichtung dafür gesorgt werden, dass das Kavernenwasser genügend oft gegen Frischwasser ausgewechselt wird.

Im allgemeinen wird man die Sohle und die Decke der Kaverne parallel zueinander unter dem gleichen Winkel gegen die Horizontale geneigt ausführen. Sie könnten aber auch verschiedene Neigungswinkel aufweisen.

## Patentansprüche

1. Gleichdruckluftspeicherkaverne mit hydraulischem Druckausgleich für Luftspeichergasturbinenkraftwerke, mit einem als Wasservorlage dienenden Wasserschacht (3), der die Speicherkaverne (1) mit einem oberirdisch gelegenen Ausgleichsbecken (2) verbindet, und einer Luftsteigleitung (4), die den Kavernenraum mit der Luftzuleitung (5) für eine Gasturbine verbindet, dadurch gekennzeichnet, dass, die Sohle und die Decke der Speicherkaverne (1) unter einem spitzen Winkel gegen die Horizontale geneigt sind und dass das mit der Luftsteigleitung (4) verbundene Ende der Kaverne (1) höher liegt als das mit dem Wasserschacht (3) verbundene Ende.

2. Gleichdruckluftspeicherkaverne nach Anspruch 1, dadurch gekennzeichnet, dass die Sohle und die Decke der Speicherkaverne (1) zueinander parallel sind.

3. Gleichdruckluftspeicherkaverne nach Anspruch 1, dadurch gekennzeichnet, dass die Neigungswinkel von Sohle und Decke unterschiedlich gross sind.

4. Gleichdruckluftspeicherkaverne nach Anspruch 1, dadurch gekennzeichnet, dass die Speicherkaverne im Bereich der Luftsteigleitung (4) nach oben zu einem Dom (9) und im Bereich des Ueberganges in den Wasserschacht (3) nach unten zu einem Sumpf (10) erweitert ist.

5. Gleichdruckluftspeicherkaverne nach Anspruch 4, dadurch gekennzeichnet, dass im Sumpf (10) ein Wirbelerzeuger (11) in Form eines Gitters vorgesehen ist.

## Claims

1. Constant-pressure air reservoir cavern comprising hydraulic pressure compensation for compressed-air gas turbine power stations, including a water shaft (3) which is used as hydraulic seal and which links the reservoir cavern (1) to an equalizing basin (2) which is located above ground, and an air riser (4) which links the cavern space with the air feed line (5) for a gas turbine, characterized in that the floor and the ceiling of the reservoir cavern (1) are inclined at an acute angle with respect to the horizontal and that the end of the cavern (1) connected to the air riser (4) is higher than the end connected to the water shaft (3).

2. Constant-pressure air reservoir cavern according to Claim 1, characterized in that the floor and the ceiling of the reservoir cavern (1) are parallel with each other.

3. Constant-pressure air reservoir cavern according to Claim 1, characterized in that the angles of inclination of floor and ceiling are of different magnitudes.

4. Constant-pressure air reservoir cavern according to Claim 1, characterized in that the reservoir cavern is expanded upwards to form a dome (9) in the area of the air riser (4) and is expanded downwards to form a sump (10) in the area of the transition to the water shaft (30).

5. Constant-pressure air reservoir cavern according to Claim 4, characterized in that a turbulence-generator (11) in the form of a grid is provided in the sump (10).

**Revendications**

1. Caverne d'accumulation d'air sous pression constante avec compensation hydraulique de la pression pour une centrale à turbines à gaz à accumulation d'air, avec un puits à eau (3) servant de soupape d'eau, qui réunit la caverne d'accumulation (1) à un bassin de compensation (2) situé à l'air libre, et avec une conduite d'air montante (4) qui réunit la chambre de la caverne à la conduite (5) d'arrivée d'air à une turbine à gaz, caractérisée en ce que la sole et le plafond de la caverne d'accumulation (1) sont inclinés d'un angle aigu par rapport à l'horizontale, et en ce que l'extrémité de la caverne (1) communiquant avec la conduite d'air montante (4) est située plus haut que l'extrémité communiquant avec le puits à eau (3).

2. Caverne d'accumulation d'air sous pression constante suivant la revendication 1, caractérisée en ce que la sole et le plafond de la caverne d'accumulation (1) sont parallèles l'un à l'autre.

3. Caverne d'accumulation d'air sous pression constante suivant la revendication 1, caractérisée en ce que les angles d'inclinaison de la sole et du plafond sont différents l'un de l'autre.

4. Caverne d'accumulation d'air sous pression constante suivant la revendication 1, caractérisée en ce que la caverne d'accumulation se prolonge par un dôme (9) supérieur dans la région de la colonne d'air montante (4) et par une cuvette (10) inférieure dans la région de la communication avec le puits à eau (3).

5. Caverne d'accumulation d'air sous pression constante suivant la revendication 4, caractérisée en ce qu'il est prévu dans la cuvette (10) un générateur de tourbillons (11) sous la forme d'une grille.

FIG.1

DETAIL I

# FIG. 2

# FIG. 3

# FIG.4

# FIG.5

# FIG.6